# FASCICULE DE BREVET EUROPEEN

(11) **EP 0 940 069 B1**
(45) Date de publication et mention de la délivrance du brevet: **23.04.2003**
(21) Numéro de dépôt: 99400470.3
(22) Date de dépôt: 26.02.1999
(51) Int. Cl.: A01B 73/06, A01B 21/08

(54) **Machine à travailler la terre à outils déployables et rétractables latéralement**
Bodenbearbeitungsmaschine mit seitlich aus-und einfaltbaren Werkzeugen
Soil working machine with laterally extendable and retractable tools

(30) Priorité: 05.03.1998 FR 9802704
(43) Date de publication de la demande: 08.09.1999
(73) Titulaire: Société des Etablissements Louis Quivogne, 70210 Polaincourt (FR)
(72) Inventeur: Quivogne, Jean-Luc, 70500 Jussey (FR)
(74) Mandataire: Lerner, François

(56) Documents cités:
- EP-A- 0 192 917
- EP-A- 0 544 556
- EP-A- 0 606 834
- EP-A- 0 781 503
- FR-A- 2 662 898
- US-A- 2 431 959
- US-A- 2 685 159

## Description

La présente invention a pour objet une machine à travailler la terre comportant, montés sur un châssis, différents outils articulés pouvant prendre une position de travail dans laquelle ils sont mis en extension dans la direction transversale à la direction de déplacement de la machine et une position de transport dans laquelle ils sont rétractés sensiblement parallèlement à la direction longitudinale du châssis, ladite machine comportant au moins deux jeux de tels outils, l'un situé vers l'avant de la machine, l'autre vers l'arrière.

Parmi les machines de ce type, on peut citer notamment les charrues à labourer la terre ou à la préparer pour l'ensemencement, comportant des rangées de disques portés par des bras dirigés transversalement et sous un certain angle par rapport au déplacement de la machine. Dans les machines de ce type, les disques situés à l'avant et les disques situés à l'arrière jouent des rôles différents de préparation de la terre, et pour obtenir les meilleurs résultats, il faut pouvoir soigneusement régler et déterminer l'angle d'attaque des disques en question. En particulier, l'angle d'attaque des disques situés à l'avant de la machine ne devront pas généralement être les mêmes que ceux des disques situés à l'arrière, et l'angle choisi dépendra du terrain, des conditions climatiques du moment et, bien entendu, du travail de préparation que l'on veut effectuer.

Actuellement, on ne connaît pas de machine de ce type permettant, de façon pratique, par exemple à partir de la cabine du tracteur, de commander à volonté l'angle d'inclinaison d'attaque des outils situés en avant et des outils situés en arrière.

Traditionnellement, l'ouverture et la fermeture des trains de disques, pour la mise en position de travail ou de transport, s'effectuent soit manuellement, train de disques par train de disques, nécessitant une intervention humaine et un effort physique, soit hydrauliquement, mais sans qu'il soit possible de commander séparément l'ouverture et la fermeture des trains de disques, l'ouverture et la fermeture se faisant soit successivement dans un ordre quelconque, soit en synchronisme de tous les trains de disques simultanément.

Du document EP-A-0 192 917 on connaît déjà une machine à travailler la terre comprenant plusieurs trains d'outils qui peuvent être rabattus dans la position de transport, ou développés dans la position de travail. Plusieurs solutions sont illustrées permettant de modifier à volonté, par l'utilisation de plusieurs vérins et des jeux de biellettes à longueur réglable, la position en extension finale de chaque outil ou jeu d'outils.

Mais il n'existe pas dans cette machine de moyens de verrouillage positif des trains d'outils dans une position quelconque d'extension. Il apparaît donc des problèmes de vibrations et le document ne permet pas non plus le choix à volonté de l'angle de travail de chaque outil, ou train d'outils, commandé directement de la cabine du tracteur.

La machine conforme à l'invention est du type général ci-dessus décrit, en ce qu'il s'agit d'une machine à travailler la terre comportant, montés sur un châssis, différents outils articulés, pouvant prendre une position de travail dans laquelle ils sont mis en extension dans la direction transversale à la direction de déplacement de la machine, et une position de transport dans laquelle ils sont rétractés sensiblement parallèlement à la direction longitudinale du châssis, ladite machine comportant au moins deux jeux de tels outils, l'un situé vers l'avant de la machine, l'autre vers l'arrière, et dans laquelle les mouvements d'extension/rétraction des outils sont commandés par des vérins, et sont agencés de façon que l'on puisse commander indépendamment les uns des autres le mouvement d'extension/rétraction de chacun des outils ou de chaque jeu d'outils avant ou arrière.

La machine selon l'invention se caractérise en ce qu'elle comprend des moyens pouvant être commandés individuellement, bloquant ou libérant à volonté le mouvement d'extension/rétraction des outils au moyen de patins de frein commandés par lesdits moyens, portés par les outils et susceptibles d'être commandés en pression contre des pistes de verrouillage solidaires du châssis ou d'en être dégagés.

L'invention et sa mise en oeuvre apparaîtront plus clairement à l'aide de la description qui va suivre faite en référence aux dessins annexés donnant uniquement à titre d'exemple des modes de mise en oeuvre de l'invention. Dans ces dessins :
- la figure 1 montre de façon schématique, en vue perspective de trois quarts par-dessus, une machine formant charrue à quatre trains de disques, en position usuelle de travail ;
- la figure 2 est une vue de dessus de la machine de la figure 1 ;
- la figure 3 est une vue de dessus, comme la figure 2, mais dans laquelle on n'a laissé subsister que les seuls organes de travail de la machine, en retirant le châssis et les roues de transport pour montrer plus clairement l'articulation des trains d'outils et la commande à coulisses utilisée ;
- la figure 4 est une vue similaire à celle de la figure 3 mais montrant la position des outils, le vérin de commande étant rétracté ainsi que les trains d'outils, pour la position de transport ;

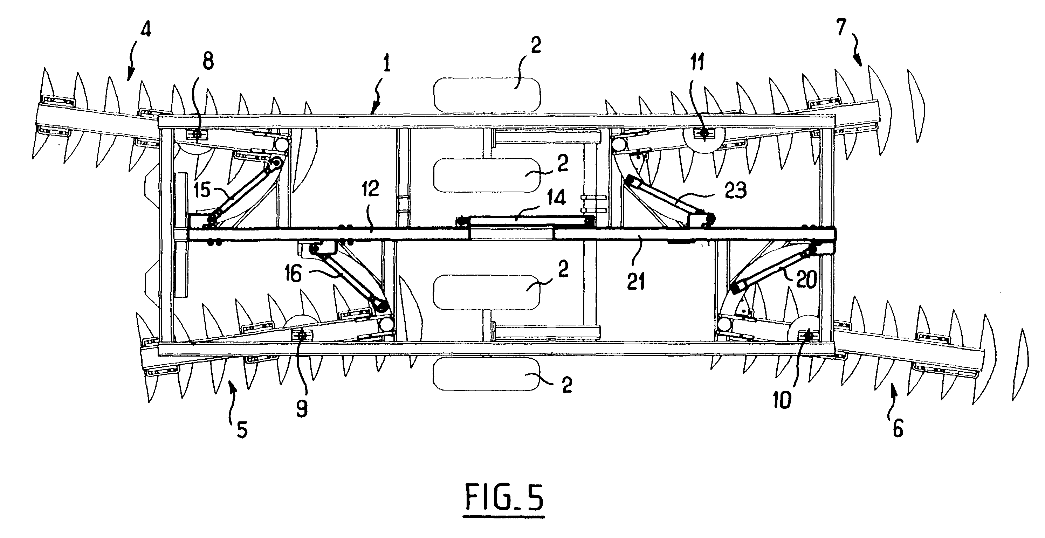

- la figure 5 est une vue similaire à la figure 4 et dans laquelle on a fait figurer le châssis et les roues de transport pour une meilleure compréhension du fonctionnement ;
- la figure 6 montre dans un schéma similaire à celui de la figure 3, mais à plus petite échelle, les outils de la machine en relation avec un circuit de commande hydraulique pouvant être utilisé, les circuits hydrauliques ayant été schématisés, à une échelle, bien entendu, beaucoup plus grande que celle des autres éléments de la machine ;
- la figure 7 est une vue similaire à celle de la figure 6 dans une variante simplifiée du dispositif de commande hydraulique ; et
- la figure 8 montre, comme la figure 1 mais à plus grande échelle, la seule partie avant de la machine construite selon une variante de réalisation.

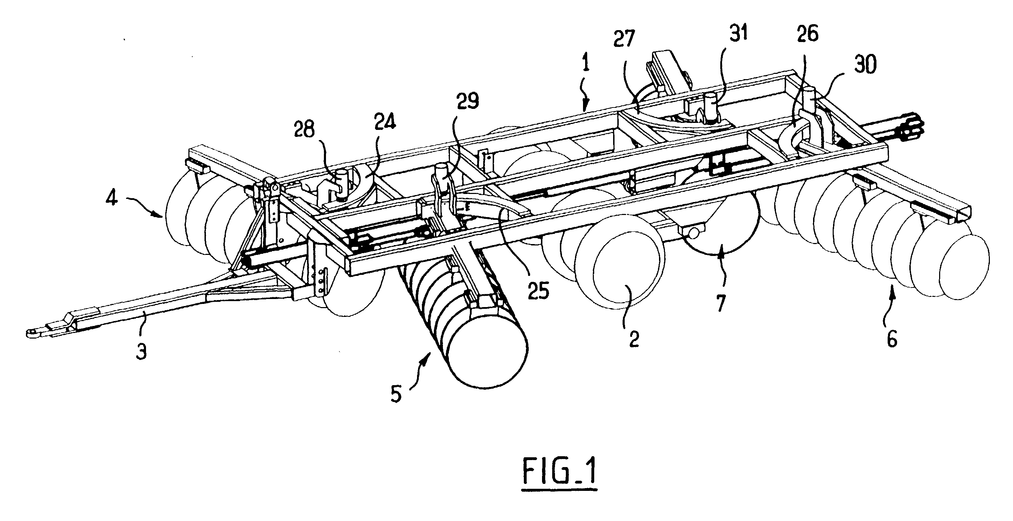

On se reportera tout d'abord à la figure 1, à l'aide de laquelle on décrira, de façon générale, une machine conforme à l'invention.

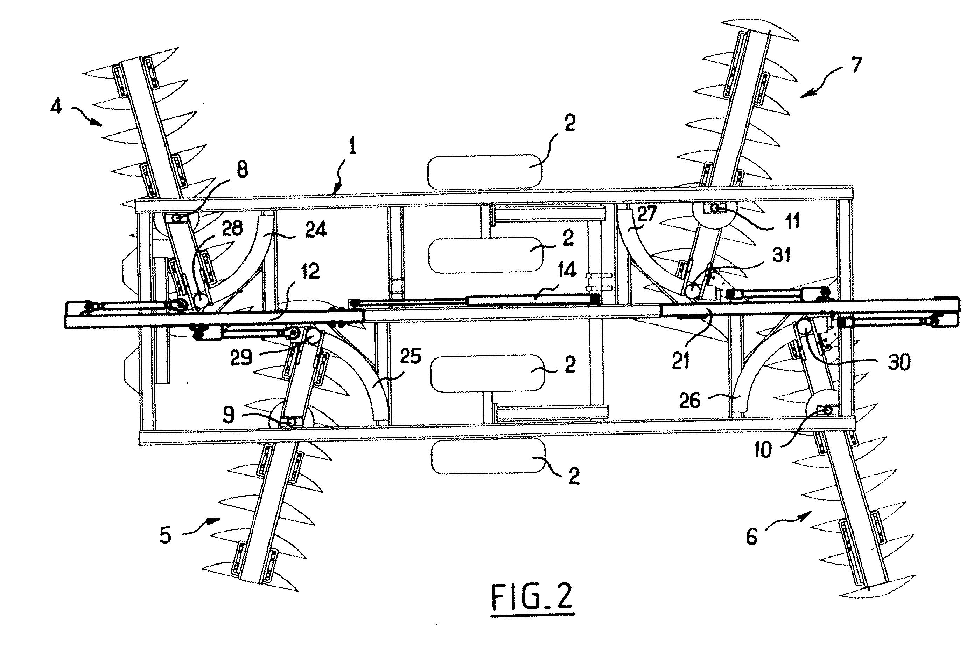

Dans l'exemple illustré, la machine est du type charrue ou herse à disques de labour ou de hersage pour la préparation de la terre. La machine comprend, de façon générale, un châssis rectangulaire en poutrelles mécanosoudées 1 portées par des roues 2 de transport, la machine étant tirée par un timon 3. Dans l'exemple illustré, la machine comporte quatre trains de disques de travail respectivement 4,5, pour les outils avant et 6,7, pour les outils arrière (voir également figure 2).

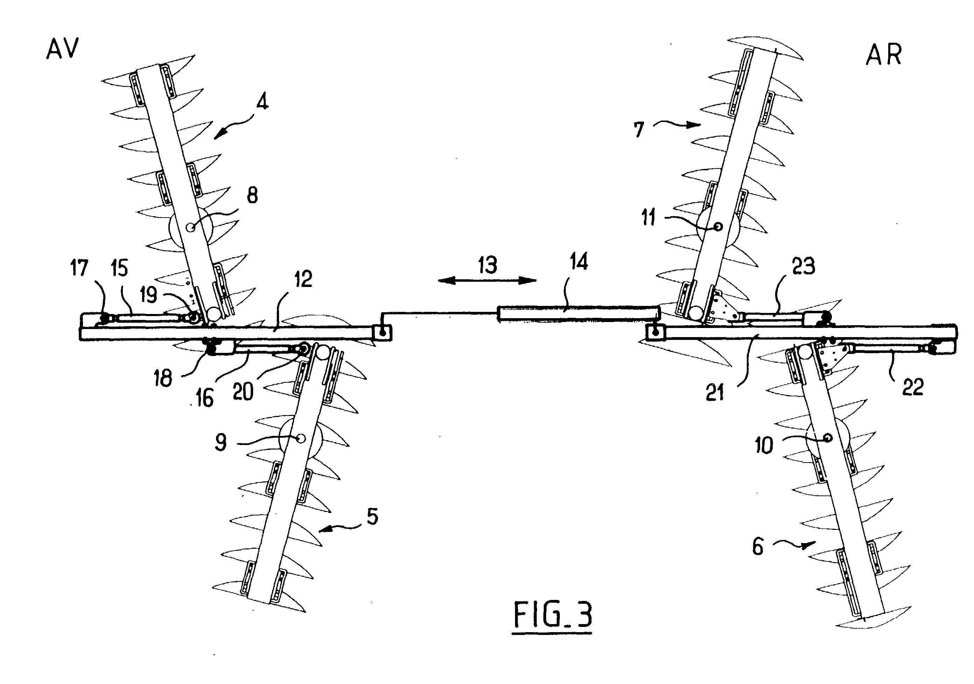

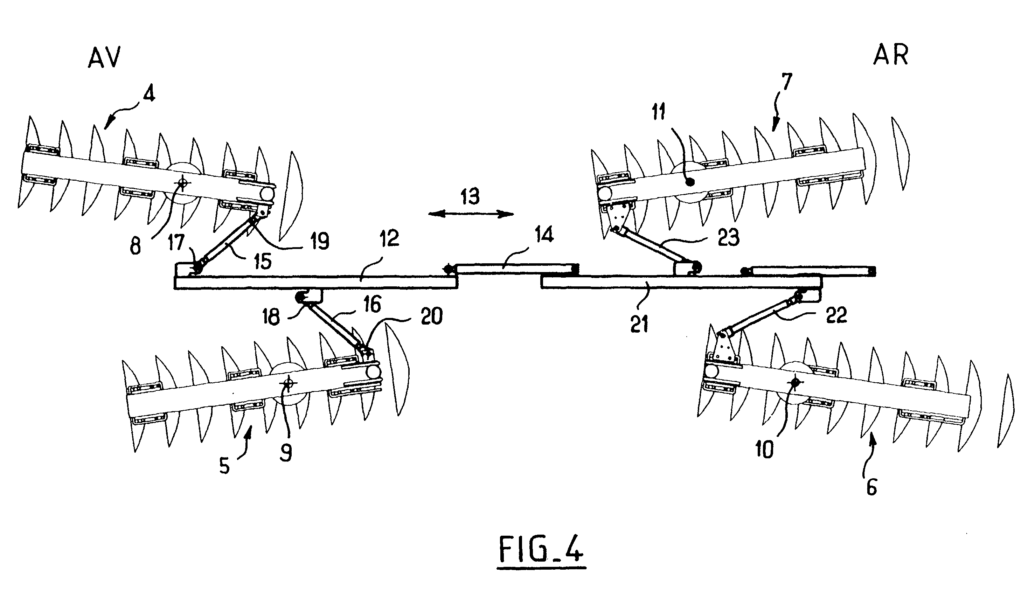

On décrira maintenant, en faisant plus spécifiquement référence aux figures 3 et 4, mais ces explications pouvant être suivies également en relation avec les figures 1 et 2, comment s'effectue la commande d'extension/ rétraction des trains d'outils 4, 5, 6 et 7.

Les trains d'outils 4, 5, 6 et 7, sont respectivement articulés en rotation autour des pivots verticaux référencés 8, 9, 10 et 11, aux dessins. Bien sûr, ces pivots sont portés par le châssis 1.

Sur les figures 3 et 4, on a référencé par les lettres AV et AR, respectivement, le côté avant et le côté arrière de la machine, soit à gauche, le côté avant et à droite, le côté arrière, dans le sens de la lecture de la feuille des dessins. Le jeu des trains d'outils avant 4, 5, est entraîné dans son mouvement d'extension/rétraction par une coulisse 12 qui peut être commandée en déplacement au moyen d'un vérin 14, selon que le vérin est commandé en extension ou en rétraction dans la direction de la double flèche 13. A la figure 3, la coulisse 12 a été poussée vers l'avant (vers la gauche de la figure) ce qui a déplacé les trains d'outils 4, 5, en extension, c'est-à-dire en développement dans la direction transversale par rapport à l'axe longitudinal de la machine. A la figure 4, le vérin 14 a été commandé en rétraction et a ramené la coulisse 12 vers l'arrière, c'est-à-dire vers la droite de la figure, commandant simultanément le mouvement en rétraction des trains de disques avant 4 et 5, qui se replient suivant une direction sensiblement parallèle à l'axe longitudinal de la machine. Ceci est réalisé par l'action des biellettes d'articulation 15, 16, liées d'une part, à la coulisse 12, respectivement aux points 17, 18, et d'autre part, au train d'outils 4, 5, respectivement aux points 19, 20.

Les mouvements de commande et d'articulation pour l'extension et la rétraction des trains d'outils arrière 6 et 7, sont tout à fait similaires à ceux des trains avant ; ils sont commandés par la coulisse 21, également actionnée par le vérin 14, et se font de façon similaire à l'aide des biellettes de commande respectivement 22, pour le train 6, et 23, pour le train 7. La commande du train arrière ne sera pas davantage décrite puisqu'elle est identique à celle du train avant.

On reviendra maintenant aux figures 1 et 2 pour décrire les moyens de blocage ou freinage utilisés en relation avec la commande d'extension/rétraction des trains d'outils.

Sur le châssis 1, on aperçoit quatre fers plats de forme courbe que l'on a référencés 24, 25, 26, 27, formant pistes, le long desquelles se déplace, associé à chaque train d'outils 4, 5, 6, 7, un patin de frein qui peut être par exemple poussé par un petit vérin 28, 29, 30, 31, sur la piste de freinage en regard 24, 25, 26, 27, lorsque l'on veut assurer un blocage du train correspondant, le patin étant libéré lorsque l'on veut permettre au contraire le mouvement de déplacement en rotation du train d'outils permettant sa mise en extension ou en rétraction.

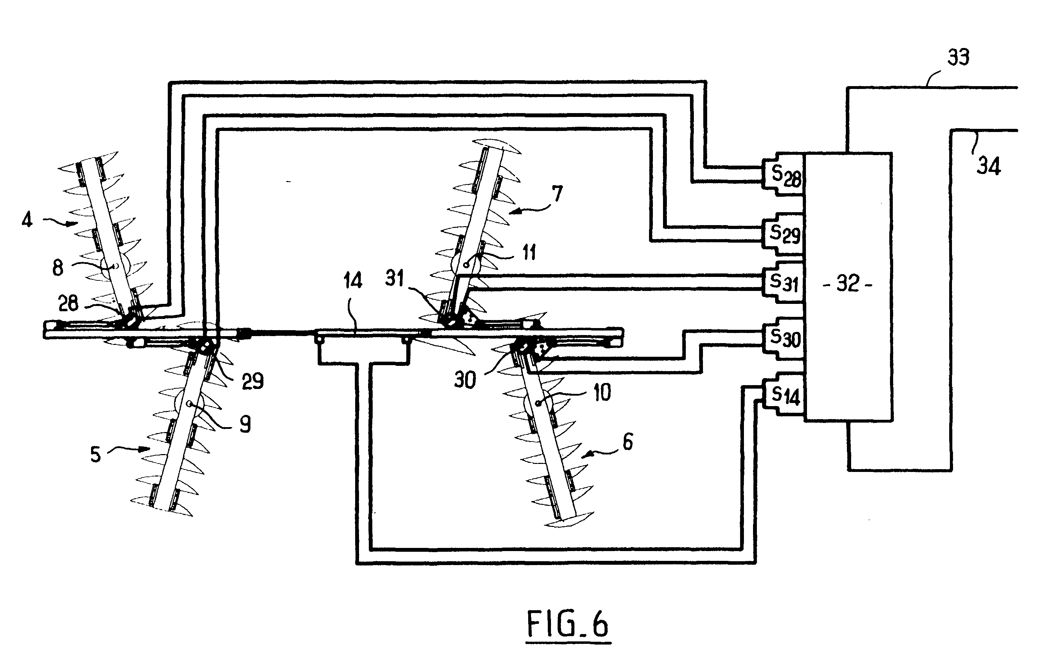

En se référant maintenant à la figure 6, on décrira le principe de fonctionnement et de commande de la machine.

A la figure 6, on a repéré en 32 le corps d'une vanne hydraulique alimentée en fluide sous pression par une conduite 33, par exemple reliée à la sortie sous pression de la pompe de fluide hydraulique du tracteur, le circuit de retour ayant été référencé 34.

Un dispositif de commande, par exemple de commande manuelle à levier (non représenté) ou un dispositif d'électrocommande à distance (non représenté) permet de commander la vanne 32 pour qu'elle alimente séquentiellement une ou plusieurs des cinq sorties de fluide ici schématisées, référencées respectivement S₂₈, commandant le vérin de frein 28, S₂₉, commandant le vérin de frein 29, S₃₁, commandant le vérin de frein 31, S₃₀, commandant le vérin de frein 30, et S₁₄, commandant le vérin d'actionnement 14 des coulisses 12 et 21.

Une opération normale d'extension/rétraction se fait de la façon suivante.

En supposant que les outils occupent la position illustrée à la figure 4, c'est-à-dire sont rétractés, le conducteur va tout d'abord, par exemple, commander l'extension des trains d'outils avant 4, 5. Pour ce faire, il va bloquer les trains arrière en verrouillant les freins 30 et 31, en alimentant par l'électrovanne les sorties S₃₁, S₃₀. Les sorties S₂₈, S₂₉, ne sont pas alimentées, de sorte que les freins 28 et 29 sont lâchés. En admettant la pression par S₁₄, le vérin 14 s'étend et commande en extension la coulisse 12 qui fait s'ouvrir les trains d'outils 4, 5. La coulisse 21 est quant à elle bloquée du fait du blocage des trains d'outils 6, 7, auxquels elle est reliée. Quand les outils ont atteint la position désirée, le conducteur peut les bloquer dans cette position, en les verrouillant, en admettant la pression aux orifices S₂₈ et S₂₉.

De la même manière, le conducteur va pouvoir commander ensuite l'extension des trains d'outils arrière 6 et 7, en déverrouillant les vérins de frein 30 et 31, en libérant la pression aux admissions S₃₀ et S₃₁. Lorsque le conducteur estime que l'angle d'inclinaison des trains arrière 6, 7, est convenable, il stoppe le mouvement en extension du vérin 14 et ramène la pression aux admissions S₃₀, S₃₁, pour maintenir bloqués serrés en position les outils et éviter leur vibration.

En cours de conduite, si le conducteur estime qu'il doit légèrement modifier la position des trains avant ou des trains arrière, il peut le faire sans arrêter le cheminement du tracteur, de la même façon qu'indiqué précédemment.

Bien entendu, les opérations de rétraction des trains d'outils se font de façon similaire en commandant la rétraction du vérin 14 et en verrouillant successivement les trains avant ou les trains arrière suivant que l'on veut rentrer d'abord le train avant ou le train arrière.

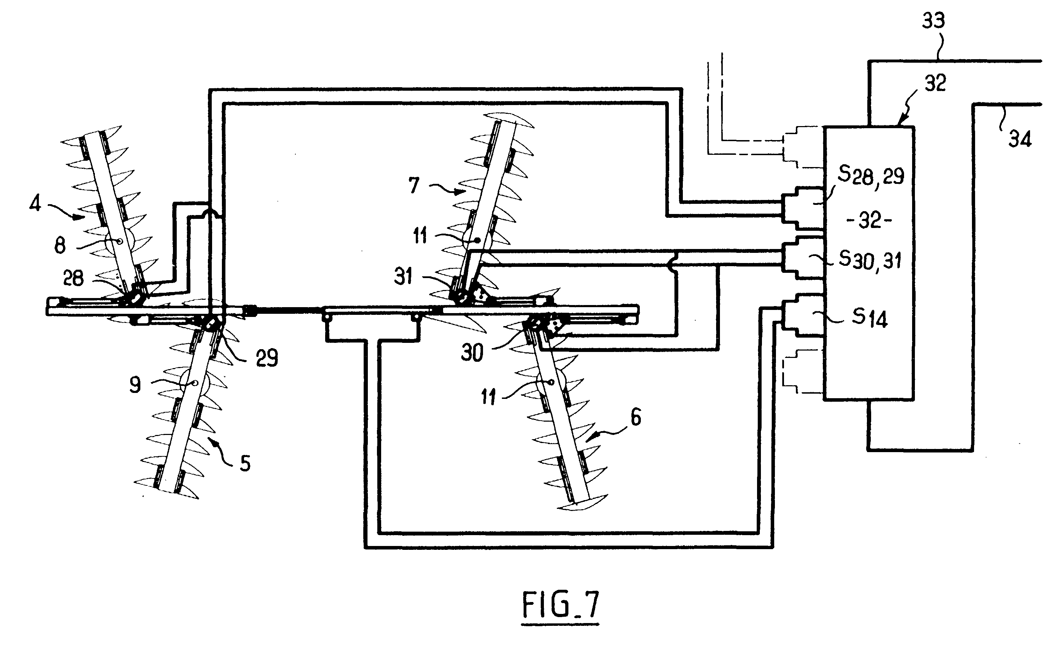

On se reportera maintenant à la figure 7 décrivant une variante de la commande. Dans cette variante, la différence par rapport à la figure 6 est seulement qu'il existe une seule sortie pour la commande en parallèle S_{28, 29}, de l'actionnement des vérins 28, 29, et une seule commande S_{30, 31}, pour la commande des vérins de serrage 30, 31. En effet, dans la mesure où les coulisses 12, 21, commandent simultanément les deux trains d'outils respectivement 4, 5 et 6, 7, il n'est pas nécessaire de différencier les moments de serrage des vérins 28, 29, d'une part, et 30, 31, d'autre part En conséquence, dans ce mode de réalisation, les deux autres sorties S₀, S₁, de la vanne hydraulique cinq voies 32, restent libres pour d'autres fonctions.

Bien entendu, l'invention n'est nullement limitée aux modes de réalisation illustrés et décrits.

C'est ainsi, par exemple, qu'au lieu de prévoir un seul vérin 14 d'actionnement de tous les trains d'outils, on pourrait prévoir, par exemple un vérin pour les trains avant et un autre vérin pour les trains arrière, ou encore un vérin pour chaque train, respectivement avant gauche, avant droit, arrière gauche, arrière droit. L'homme de l'art comprendra immédiatement comment, en fonction de ces modifications, on pourra, par blocage et commande séquentielle des différents vérins d'actionnement et de blocage des organes, ajuster à volonté la position des trains d'outils.

Dans le mode de réalisation décrit, on a montré une machine comportant deux jeux d'outils, respectivement avant et arrière, droit et gauche. Bien sûr, la machine pourrait comprendre un plus grand nombre d'outils sans que le principe de commande des outils soit modifié.

En place des vérins hydrauliques présentés aux schémas, on pourrait utiliser des vérins pneumatiques, c'est-à-dire n'importe quel vérin fluidique, en fonction du fluide sous pression dont dispose la cabine motrice. De même, à la place de certains vérins hydrauliques ou pneumatiques, on pourrait également utiliser des vérins électriques simplement alimentés par des câbles électriques et une commande électrique ou électronique.

Au lieu d'utiliser un seul vérin 14, on peut utiliser, sans modifier notablement la construction, deux vérins séparés pour commander respectivement la coulisse 12 et la coulisse 21. Dans ce cas, la commande séparée des jeux d'outils avant et arrière se fera simplement en commandant en extension ou en rétraction le vérin correspondant ; les vérins de blocage 28 à 31 pouvant être utilisés en complément ou non, par exemple pour un meilleur positionnement des outils.

Dans le mode de réalisation décrit, c'est à partir d'une coulisse et de jeux de bielles que l'on fait pivoter les trains d'outils, c'est-à-dire les barres qui les portent Bien entendu, d'autres systèmes de commande mécanique pourraient être utilisés, par exemple comportant des engrenages ou des jeux de bielles et d'engrenages et analogues.

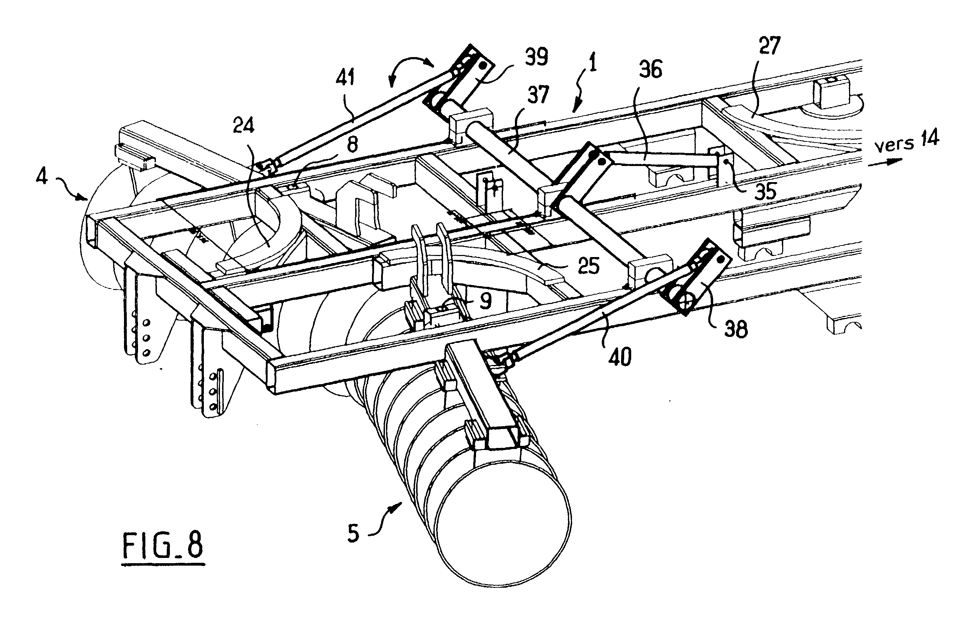

Ainsi, par exemple dans la variante d'application de la figure 8, le vérin de commande 14 (non visible sur la figure) va commander en déplacement longitudinal, dans un sens ou dans l'autre, selon que le vérin est commandé en extension ou en rétraction, le coulisseau 35 qui, par la bielle de liaison 36, va commander la rotation dans un sens ou dans l'autre de la barre 37 qui, à ses extrémités latérales, porte des bras de manivelle 38, 39 dont les mouvements, transmis par les biellettes 40, 41, vont commander l'ouverture ou la fermeture des jeux d'outils respectifs 4, 5, du train avant. On observe que dans cette réalisation, au contraire de celle des figures précédentes, et comme il apparaît clairement de l'examen comparatif des figures 2 et 8, les points d'articulation de commande par les biellettes agissent sur les outils 4,5, se situent à l'extérieur du châssis 1 et non à l'intérieur.

Toujours en relation avec la figure 8 et selon encore une autre variante, la référence 36 peut désigner un vérin dont le pied est appuyé sur un appui 35 solidaire du châssis 1. L'actionnement du vérin 36 commande alors les mouvements d'extension/rétractation des trains d'outils 4, 5. Un montage similaire est alors avantageusement utilisé pour commander le jeu d'outils arrière.

## Revendications

1. Machine à travailler la terre comportant, montés sur un châssis, différents outils (4, 5, 6, 7) articulés, pouvant prendre une position de travail dans laquelle ils sont mis en extension dans la direction transversale à la direction de déplacement de la machine, et une position de transport dans laquelle ils sont rétractés sensiblement parallèlement à la direction longitudinale du châssis (1), ladite machine comportant au moins deux jeux de tels outils, l'un (4, 5) situé vers l'avant de la machine, l'autre (6, 7) vers l'arrière, et dans laquelle les mouvements d'extension/rétraction des outils sont commandés par des vérins (14), et sont agencés de façon que l'on puisse commander indépendamment les uns des autres le mouvement d'extension/rétraction de chacun des outils ou de chaque jeu d'outils avant (4, 5) ou arrière (6, 7), **caractérisée en ce qu'**elle comprend des moyens (28, 29, 30, 31) pouvant être commandés individuellement, bloquant ou libérant à volonté le mouvement d'extension/rétraction des outils (4, 5, 6, 7) au moyen de patins de frein commandés par lesdits moyens (28, 29, 30, 31), portés par les outils (4, 5, 6, 7) et susceptibles d'être commandés en pression contre des pistes de verrouillage (24, 25, 26, 27) solidaires du châssis (1) ou d'en être dégagés.

2. Machine selon la revendication 1, **caractérisée en ce qu'**il est prévu un vérin pour chaque train d'outils (4, 5, 6, 7).

3. Machine selon la revendication 1 ou 2, **caractérisée en ce que** chaque train d'outils étant articulé autour d'un pivot (8, 9, 10, 11), lesdites pistes de verrouillage (24, 25, 26, 27) sont courbes.

4. Machine selon la revendication 1 ou la revendication 2, **caractérisée en ce que** les mouvements d'extension/rétraction de chaque jeu d'outils avant (4, 5) ou arrière (6, 7) sont commandés par une coulisse (12, 21) entraînée par un vérin (14) précité, la coulisse agissant par un jeu de renvoi mécanique de type bielles (15, 16, 22, 23), engrenages ou analogues, pour faire pivoter le jeu d'outils dans la direction d'extension ou dans la direction de rétraction selon le sens de déplacement de la coulisse.

5. Machine selon la revendication 4, **caractérisée en ce qu'**un seul vérin (14) agit sur deux coulisses (12, 21) disposées en opposition.

6. Machine selon la revendication 4, **caractérisée en ce que** des vérins séparés agissent sur chaque coulisse.

7. Machine selon l'une quelconque des revendications précédentes, **caractérisée en ce qu'**elle comprend une vanne de commande fluidique (32), hydraulique ou pneumatique, permettant les commandes séquentielles d'extension/rétraction des outils et de verrouillage/déverrouillage des outils.

8. Machine selon l'une quelconque des revendications précédentes, **caractérisée en ce que** les vérins de commande (14), des mouvements d'extension/rétraction et/ou de blocage/libération (28, 29, 30, 31) des outils (4, 5, 6, 7), sont des vérins fluidiques.

9. Machine selon l'une quelconque des revendications 1 à 7, **caractérisée en ce que** les vérins de commande des mouvements d'extension/rétraction et/ou de blocage/libération des outils sont des vérins électriques.

## Claims

1. A soil working machine comprising a plurality of articulated tools (4,5,6,7) mounted on a chassis, capable of adopting a working position in which they extend in a direction transverse to the direction of movement of the machine, and a transporting position in which they are retracted approximately parallel to the longitudinal direction of the chassis (1), the said machine comprising at least two sets of such tools, one (4,5) situated towards the front of the machine, the other (6,7) towards the rear, and in which the extension/retraction movements of the tools are controlled by actuators (14), the tools being arranged so that the extension/retraction movement of each of the tools or of each set of forward (4,5) or rear (6,7) tools can be controlled independently of one another, **characterised in that** it includes individually controllable means (28,29,30,31) for selectively locking or releasing the extension/retraction movement of the tools (4,5,6,7) by means of brake pads controlled by the said means (28,29,30,31) carried by the tools (4,5,6,7) and which can be controlled by pressure against locking tracks (24,25,26,27) closely linked to the chassis (1) or disengageable from it.

2. A machine according to Claim 1, **characterised in that** it is provided with an actuator for each set of tools (4,5,6,7).

3. A machine according to Claim 1 or 2, **characterised in that** each set of tools is articulated about a pivot (8,9,10,11) and the said locking tracks (24,25,26,27) are curved.

4. A machine according to Claim 1 or Claim 2, **characterised in that** the extension/retraction movements of each forward (4,5) or rear (6,7) set of tools are controlled by a slider (12,21) driven by a said actuator (14), the slider acting, via a geared on like mechanical linkage (15,16,22,23), to make the set of tools pivot in the direction of extension or retraction according to the direction of displacement of the slider.

5. A machine according to Claim 4, **characterised in that** a single actuator (14) acts on two sliders (12,21) arranged in opposition.

6. A machine according to Claim 4, **characterised in that** separate actuators act on each slider.

7. A machine according to any of the preceding claims, **characterised in that** it comprises a hydraulic or pneumatic fluid control gate (32), permitting sequential extension/retraction and locking/releasing control of the tools.

8. A machine according to any of the preceding claims, **characterised in that** the actuators (14) for controlling the extension/retraction movements and/or the locking/releasing (28,29,30,31) of the tools (4,5,6,7) are fluid actuators.

9. A machine according to any of Claims 1 to 7, **characterised in that** the actuators for controlling the extension/retraction movement and/or locking/releasing of the tools are electrical actuators.

## Patentansprüche

1. Maschine zur Erdbearbeitung, bestehend aus verschiedenen, auf einem Chassis montierten, beweglichen Werkzeugen (4, 5, 6, 7), die eine Arbeitsposition einnehmen können, bei der diese quer zu der Fahrrichtung der Maschine ausgefahren sind, sowie eine Transportposition, in der sie im Wesentlichen parallel zu der Längsrichtung des Chassis (1) eingezogen sind, wobei die Maschine wenigstens zwei dieser Werkzeuge besitzt, eines (4, 5), das vorne an der Maschine angeordnet ist, und ein anderes (6, 7), das hinten angeordnet ist, und wobei die Bewegungen des Ausfahrens/Zurückziehens durch einen Stellantrieb (14) gesteuert werden und so betätigt werden, dass man die Ausfahr- und Rückziehbewegung jedes Werkzeugs oder das Spiel jedes vorderen (4, 5) oder hinteren (6, 7) Werkzeugs unabhängig steuern kann, **dadurch gekennzeichnet, dass** sie Mittel (28, 29, 30, 31) besitzt, die unabhängig steuerbar sind, die mittels Bremsklötzen, die durch diese Mittel (28, 29, 30, 31) gesteuert werden, das Ausfahren/Zurückziehen der Werkzeuge (4, 5, 6, 7) nach Wunsch blockieren oder freigeben, und die auf den Werkzeugen (4, 5, 6, 7) angeordnet sind und gegen Verriegelungsbahnen (24, 25, 26, 27), die mit dem Chassis (1) einstückig sind, gepresst oder von diesen gelöst werden können.

2. Maschine nach Anspruch 1, **dadurch gekennzeichnet, dass** für jedes Werkzeug (4, 5, 6, 7) ein Stellantrieb vorgesehen ist.

3. Maschine nach Anspruch 1 oder 2, **dadurch gekennzeichnet, dass** jedes Werkzeug um eine Drehachse (8, 9, 10, 11) schwenkbar ist, wobei die Verriegelungsbahnen (24, 25, 26, 27) Kurven sind.

4. Maschine nach Anspruch 1 oder Anspruch 2, **dadurch gekennzeichnet, dass** die Ausfahr-/Zurückziehbewegungen des vorderen (4, 5) oder des hinteren (6, 7) Werkzeugsatzes durch eine Gleitführung (12, 21) gesteuert werden, die durch einen vorgenannten Stellantrieb betätigt wird, wobei die Gleitführung durch einen Satz mechanischer Vorgelege in der Art von Lenkern (15, 16, 22, 23) wirkt, die mit einem Räderwerk oder dergleichen versehen sind, um den Werkzeugsatz in der Ausfahrrichtung oder der Rückzugsrichtung entsprechend dem Verschiebungsweg der Gleitführung schwenken zu lassen.

5. Maschine nach Anspruch 4, **dadurch gekennzeichnet, dass** ein einziger Stellantrieb (14) auf zwei Gleitführungen (12, 21) wirkt, die entgegengesetzt angeordnet sind.

6. Maschine nach Anspruch 4, **dadurch gekennzeichnet, dass** auf jede Gleitführung ein separater Stellantrieb Zylinder wirkt.

7. Maschine nach einem der vorhergehenden Ansprüche, **dadurch gekennzeichnet, dass** sie ein hydraulisches oder pneumatisches Fluidsteuerungsventil (32) besitzt, das aufeinander folgende Steuerbefehle für das Ausfahren/Zurückziehen und das Verriegeln/Entriegeln der Werkzeuge erlaubt.

8. Maschine nach einem der vorhergehenden Ansprüche, **dadurch gekennzeichnet, dass** die Steuerantriebe (14) für die Ausfahr-/Zurückziehbewegungen und/oder der Blockierung/Freigabe (28, 29, 30, 31) der Werkzeuge (4, 5, 6, 7) fluidische Kolbenzylinder sind.

9. Maschine nach einem der Ansprüche 1 bis 7, **dadurch gekennzeichnet, dass** die Steuerantriebe für die Bewegungen beim Ausfahren/Zurückziehen und/oder Blockieren/Freigeben elektrische Antriebe sind.
